# EUROPÄISCHE PATENTANMELDUNG

(11) **EP 4 650 077 A1**
(43) Veröffentlichungstag der Anmeldung: **19.11.2025**
(21) Anmeldenummer: 24176696.3
(22) Anmeldetag: 17.05.2024
(51) Int. Cl.: B21D 22/20, B21D 28/26, B21D 35/00, B21D 53/88, B62D 25/02, B62D 25/04, B62D 29/00, C21D 1/673, C21D 9/46, B21D 28/16

(54) **KRAFTFAHRZEUGBAUTEIL SOWIE VERFAHREN ZU DESSEN HERSTELLUNG MITTELS WARMSCHNEIDEN**

(71) Anmelder: Benteler Automobiltechnik GmbH, 33102 Paderborn (DE)
(72) Erfinder: Buse, Christian, 33165 Lichtenau (DE); Jiao, Feng, 33098 Paderborn (DE); Lütkemeyer, Oliver, 33106 Paderborn (DE); Fortmeier, Günter, 33129 Delbrück (DE)
(74) Vertreter: Osterhoff, Utz

(57) **Zusammenfassung**

Die Erfindung betrifft ein Kraftfahrzeugbauteil (1), hergestellt durch Warmumformen und Presshärten aus einer härtbaren Stahlblechplatine (9), wobei das Kraftfahrzeugbauteil (1) einen Verstärkungspatch (10) aufweist, welcher mit der Stahlblechplatine (9) zumindest abschnittsweise eine Doppellage (11) ausbildet, dadurch gekennzeichnet, dass das Kraftfahrzeugbauteil (1) im Bereich des Verstärkungspatches (10) eine durch Warmschneiden hergestellte Öffnung (14) aufweist, dergestalt, dass eine Öffnung (14) in dem Verstärkungspatch (10) ausgebildet ist und eine Öffnung (14) in der Stahlblechplatine (9), wobei bevorzugt der die Öffnung (14) umlaufende Randbereich (16) an der Stahlblechplatine (9) oder dem Verstärkungspatch (10) gegenüber der weiteren Oberfläche (18) zurückversetzt eingeprägt ist.

## Beschreibung

Die vorliegende Erfindung betrifft ein Kraftfahrzeugbauteil hergestellt durch Warmumformen und Presshärten gemäß den Merkmalen im Oberbegriff von Anspruch 1.

Die vorliegende Erfindung betrifft weiterhin ein Verfahren zur Herstellung des Kraftfahrzeugbauteils gemäß den Merkmalen im Anspruch 8.

Aus dem Stand der Technik ist die Warmumform- und Presshärtetechnologie bekannt. Diese wird insbesondere in der Kraftfahrzeugindustrie eingesetzt um Blechbauteile für den Karosseriebau oder sonstige Kraftfahrzeugbauteile herzustellen.

Hierzu wird eine Blechplatine aus einer härtbaren Stahllegierung auf über Ac3-Temperatur erwärmt. Diese liegt in der Regel bei ca. 900° C oder höher. Man spricht auch von Austenitisierung. In diesem warmen Zustand ist das Bauteil besonders leicht umformbar. Dies wird Warmumformen genannt.

Ist das Bauteil einmal umgeformt, so wird es in einem nächsten Schritt pressgehärtet. Dieser Vorgang kann auch Abschreckhärten genannt werden. Es wird mit einer Abkühlgeschwindigkeit, welche auch als kritische Abkühlgeschwindigkeit bezeichnet werden kann, von der Temperatur über Austenitisierungtemperatur derart rasch bzw. schnell abgekühlt, dass das zuvor austenitische Gefüge in ein gehärtetes Gefüge, insbesondere martensitisches Gefüge umgewandelt wird. Hier können Zugfestigkeiten Rm von mehr als 1000 MPa, insbesondere mehr als 1300 MPa und je nach verwendeter Stahllegierung auch mehr als 1500 MPa oder mehr als 1800 MPa eingestellt werden.

Je nach Anforderung ist es notwendig solche hochfesten bzw. höchstfesten Bauteile zusätzlich zu verstärken. Dazu werden lokal Bauteilpatches bzw. Verstärkungspatches aufgebracht. Die Bauteilpatches selbst können auch aus einer härtbaren Stahllegierung hergestellt sein. Die Bauteilpatches können jedoch auch aus einer anderweitigen metallischen, insbesondere Stahllegierung, hergestellt sein. Insbesondere ist es bekannt, dass das eigentliche Kraftfahrzeugbauteil, hergestellt aus der Stahlblechplatine, zusammen mit dem Verstärkungsblech umgeformt werden. Die Verstärkungspatches können dabei mit der Stahlblechplatine gekoppelt sein, beispielsweise durch Verschweißen bzw. auch durch Kleben.

Ferner ist es bekannt, derartige Kraftfahrzeugbauteile in einem Innenbereich bzw. Binnenbereich zu schneiden bzw. zu lochen. Es kann sich beispielsweise um Öffnungen handeln, um Kabel durchzuführen, andere Bauteile anzubinden bzw. sonstige Montageöffnungen bzw. Einbauöffnungen für weitere Bauteile.

Weiterhin ist aus dem Stand der Technik hierzu das sogenannte Warmschneiden bekannt. Eine Stahlblechplatine wird hierzu in dem warmen Zustand mithin bei Austenitisierungstemperatur bzw. in einem restwarmen Zustand, mithin in einem Zustand vor vollständiger Härtung geschnitten bzw. gelocht. Mithin findet der Warmschneidevorgang vor, während oder nach dem Warmumformen, jedoch vor dem Presshärten statt.

Aufgabe der vorliegenden Erfindung ist es, ausgehend vom Stand der Technik, eine Möglichkeit aufzuzeigen, ein verstärktes Bauteil präzise und kostengünstig warmzuschneiden.

Die zuvor genannte Aufgabe wird erfindungsgemäß mit den Merkmalen im Anspruch 1 gelöst.

Ein verfahrenstechnischer Teil der Aufgabe wird weiterhin mit den Merkmalen im Anspruch 8 gelöst.

Die vorliegende Erfindung sieht somit vor, dass ein Kraftfahrzeugbauteil hergestellt wird durch Warmumformen und Presshärten aus einer härtbaren Stahlblechplatine. Bei dem Kraftfahrzeugbauteil handelt es sich insbesondere um eine Kraftfahrzeugsäule, beispielsweise eine A-Säule, B-Säule oder C-Säule, ein Dachrahmen bzw. Windschutzscheibenrahmen. Es kann sich bei dem Kraftfahrzeugbauteil jedoch auch um andere Karosseriebauteile bzw. Chassisbauteile eines Kraftfahrzeuges handeln.

Dieses Kraftfahrzeugbauteil weist einen Verstärkungspatch auf, welcher mit der Stahlblechplatine zumindest abschnittsweise eine Doppellage ausbildet. Mithin ist das Kraftfahrzeugbauteil lokal an verschiedenen Stellen verstärkt durch entsprechenden Verstärkungspatch. Das Kraftfahrzeugbauteil ist durch Warmumformen und Presshärten hergestellt und weist bevorzugt eine Zugfestigkeit lokal von zumindest Rm größer 1000 MPa, insbesondere 1300 MPa, bevorzugt größer 1500 MPa auf.

Erfindungsgemäß zeichnet sich das Kraftfahrzeugbauteil aus, dass es im Bereich des Verstärkungspatches eine durch Warmschneiden hergestellte Öffnung aufweist. Die Öffnung ist durchgehend hergestellt, mithin durchgreift die Öffnung die vollständige Wandstärke. Das Material ist somit im Bereich der Öffnung vollständig ausgeschnitten. Anstelle von Warmschneiden kann auch von einem Warmlochen gesprochen werden, insbesondere, wenn die Öffnung rund, ganz besonders bevorzugt beispielsweise kreisrund, ausgebildet ist. Die Öffnung kann jedoch auch elliptisch oder polygonal ausgebildet sein. Die Öffnung durchgreift somit die umgeformte Stahlblechplatine und das Verstärkungspatch. Diese beiden Öffnungen, also die Öffnung der Stahlblechplatine und die Öffnung des Verstärkungspatches sind fluchtend ausgebildet. Insbesondere weisen die beiden Öffnungen die gleichen geometrischen Abmessungen auf, da sie mit einem Schneidwerkzeug bzw. Lochstempel hergestellt sind.

Es hat sich erfindungsgemäß als besonders vorteilig erwiesen, wenn der die Öffnung umlaufende Randbereich an einem Bauteil, mithin an der umgeformten Stahlblechplatine oder dem Verstärkungspatch gegenüber der weiteren Oberfläche zurückversetzt eingeprägt ist. Die Einprägung wird durch eine reine Materialverdrängung hergestellt. Es folgt im Sinne der Einprägung kein Trenn- oder Schneidvorgang. Dies bedeutet im Sinne der Erfindung, dass die die Öffnung umrandende Oberfläche in Richtung der Wandung zurückversetzt ist bzw. eingeprägt ist. Erfindungsgemäß kann hierdurch beim Warmschneiden bzw. Lochstempeln ein Auftreten der Gratbildung kompensiert werden. Insbesondere ist es im Bereich der Doppellage schwierig einen entsprechenden Schneidvorgang bzw. Lochstempelvorgang durchzuführen. Durch die Zurückverprägung wird zum einen die Gesamtwanddicke in diesem Bereich reduziert, zum anderen ist eine eventuelle Gratbildung nicht mehr überstehend ausgebildet und somit nicht über die Bauteiloberfläche überstehend ausgebildet.

Die zurückversetzte Einprägung ist insbesondere um 4 % bis 40 %, bevorzugt 8 % bis 35 %, insbesondere 12 % bis 30 % gegenüber der weiteren, die Einprägung selbst umrandenden Oberfläche zurückversetzt. Die 4 % bis 20 % beziehen sich auf die Wandstärke der Stahlblechplatine mit Einprägung oder des Verstärkungspatches. In der Folge kann von Einprägung oder Verprägung gesprochen werden.

Im Rahmen der Erfindung bedeutet umlaufend, dass wenigstens über eine Teilumfangslänge der Öffnung bzw. des Lochrandes die Einprägung ausgebildet ist. diese sollte mindestens 30 %, vorzugsweise mindestens 50 %, insbesondere mindestens 70 % und besonders bevorzugt vollständig umlaufend ausgebildet sein. Möglich ist auch, dass die Einprägung sich aus Teilsegmenten über mehrere Teilumfangslängen zusammensetzt.

Die Einprägung erstreckt sich in Radialrichtung mithin in Richtung der Wandstärke selbst in Richtung des Bauteils bzw. in radialer Richtung von der Öffnung abstehend, also in Querrichtung radial umlaufend und mindestens 0,5 mm, bevorzugt mehr als 1 mm. Sie sollte jedoch weniger als 5 mm radial abstehen. Eventuelle Toleranzen bei Durchführen des Schneidevorganges können somit kompensiert werden, so dass bei Erstellen zunächst der Einprägung an dem Vormaterial mithin der flachen Stahlblechplatine bzw. dem Verstärkungspatch Sorge getragen wird, dass der spätere Schneidevorgang sicher in dem Bereich der Einprägung durchgeführt wird.

Weiterhin bevorzugt weist der Lochrand der Öffnung nach dem Presshärten einen Grat auf, dessen Länge kleiner 0,3 mm, insbesondere kleiner 0,2 mm ist. Bevorzugt ist durch das Warmschneiden, insbesondere in Kombination mit der Einprägung und der damit verringerten Wandstärke auf der Seite des Austritts des Schneidwerkzeugs bzw. Lochstempels die Öffnung annähernd gratfrei ausgebildet. In einer alternativen Ausgestaltungsvariante wird insbesondere bei der durch das Warmschneiden bzw. Warmlochen hergestellten Öffnung ein Grat ausgebildet. Dieser Grat wird dann in die Einprägung hinein, versetzt ausgebildet. Ein zusätzlicher Formschluss wird somit durch den Grat bereitgestellt.

Weiterhin besonders bevorzugt weist die Wandung der Öffnung einen Glattschnittanteil größer 25 %, insbesondere größer 40 % auf. Besonders bevorzugt beträgt der Glattschnittanteil ca. > 50 %. Die Wandung der Gesamtöffnung ist hierbei zu verstehen. Diese ist somit aus der Doppellage gebildet aus der Stahlblechplatine und dem Verstärkungspatch. Insbesondere weist das auf der Einlochseite bzw. Lochstempelseite gelegene Stahlblech (also entweder das Verstärkungsblech oder die Stahlblechplatine) eine gratfreie Öffnung mit nahezu 100 % Glattschnittanteil auf.

In einer weiteren bevorzugten Ausgestaltungsvariante kann in die Öffnung eine Einstanzmutter eingesetzt sein. Die Einstanzmutter würde dann das Stanzen der Öffnung selbst übernehmen und in dem Bauteil verbleiben.

Das zuvor genannte erfindungsgemäße Bauteil wird mit einem Verfahren mit den nachfolgenden Merkmalen hergestellt:
- Bereitstellen einer härtbaren Stahlblechplatine und eines Verstärkungspatches,
- Koppeln der beiden Teile, dergestalt, dass die Stahlblechplatine und das Verstärkungspatch eine Doppellage ausbilden,
- Erwärmen auf über Ac3-Temperatur, wobei die Einprägung nach dem Erwärmen und vor dem Warmumformen oder während des Warmumformens eingebracht wird,
- Warmumformen, wobei die Schneideoperation während oder nach der Warmumformung durchgeführt wird,
- Warmschneiden wobei ein Schneidewerkzeug auf der Rückseite der Einprägung schneidet und den Ausschnitt auf der Seite der Einprägung auswirft,
- Presshärten des so umgeformten Kraftfahrzeugbauteils.

Somit wird zunächst die Stahlblechplatine aus einer härtbaren Stahllegierung und ein Verstärkungspatch, welches ebenfalls aus einer härtbaren Stahllegierung hergestellt sein kann, bereitgestellt.

In eines der Bauteile wird in dem Bereich, in dem später die Öffnung erzeugt werden soll, eine Einprägung vorgenommen. Dies kann auf einem Prägewerkzeug erfolgen. Die Einprägung ist eine Reduzierung der Wandstärke durch einen Prägevorgang. Bevorzugt wird die Einprägung nach dem Erwärmen auf Ac3-Temperatur vorgenommen. Die Einprägung kann somit in das Material in einem weichen Gefügezustand eingebracht werden. Die Einprägung wird dann im Weiteren besonders bevorzugt in dem Warmumformwerkzeug selbst eingeprägt. Beispielsweise gibt es hier einen Überstand des Warmformwerkzeuges, so dass die Einprägung hergestellt wird, das Bauteil im Warmumformzustand im Warmumformwerkzeug verbleibt und durch einen Lochstempel vorzugsweise zumindest auf der gegenüberliegenden Seite eine entsprechende Lochung vorgenommen wird.

Die beiden Teile, mithin die Stahlblechplatine und das Verstärkungspatch werden dann miteinander gekoppelt, beispielsweise kann dies durch Schweißen oder Verkleben erfolgen.

Es erfolgt dann eine Erwärmung auf über Ac3-Temperatur bzw. Austenitisierungsvorgang. Die so bereitgestellte Formmaterial wird dann in ein Warmumformwerkzeug eingelegt. Während oder nach dem Warmumformvorgang findet dann ein Warmschneiden bzw. Warmlochen statt. Ein entsprechendes Schneidwerkzeug, was beispielsweise auch ein Lochstempel sein kann, wird auf der Rückseite der Einprägung beginnend mit dem Schneidvorgang bzw. Lochvorgang angesetzt, dergestalt, dass der Ausschnitt auf der Seite der Einprägung ausgeworfen wird. Eine eventuelle Gratbildung ist aufgrund der Tatsache, dass die Einprägung in ihrer geometrischen Ausdehnung größer ist als die zu erzeugende Öffnung gegenüber einer Oberfläche zurückversetzt ausgebildet.

Beim Warmschneiden kann der Lochstempel die Doppellage vorzugsweise vollständig durchdringen, wobei direkt nach der Einlochbewegung ein Rückzug erfolgen kann, um ein Aufschrumpfen des Lochrands auf den Stempel zu vermeiden. Ebenso kann ein ungewünschter, zeitlich längerer Kontakt von Lochrand und Lochstempelmantelfläche bei der Rückbewegung durch die Optimierung der Lochstempelmantelfläche vermieden werden, beispielsweise durch leicht konisch zur Stempelspitze aufgeweitete Stempelgeometrie.

Im Anschluss wird das so durch Warmumformen und Warmschneiden hergestellte Kraftfahrzeugbauteil pressgehärtet und aus dem Warmumform- und Presshärtewerkzeug entnommen.

Die Einprägung selbst kann auch beidseitig ausgebildet sein, mithin auf der Seite des Lochstempels und auf der gegenüberliegenden Seite eingebracht werden. Dies begünstigt den initialen Schneidvorgang während des ersten Auftreffens des Lochstempels sowie an der Eintrittsseite und auf der Austrittsseite des Lochstempels entsprechend die Gratbildung.

Bevorzugt wird die Einprägung nur in dem Schnittrandbereich erzeugt. Die Einprägung ist dann insbesondere ringförmig ausgebildet bzw. folgt der Sollkontur der Öffnung.

Besonders bevorzugt wird der Schneidvorgang bei einer Temperatur zwischen 480° C bis 800° C, bevorzugt 500° C bis 800° C, insbesondere zwischen 600° C und 730° C durchgeführt. Besonders letztgenannte Temperaturintervalle stellen einen sehr hohen Glattschnittanteil und die Gratfreiheit zumindest der Öffnung desjenigen Stahlblechs auf der Einlochseite sicher. Zudem sind die letztgenannten Temperaturintervalle im Hinblick auf den Werkzeugverschleiß besonders vorteilhaft. Zur Prävention von Werkzeugverschleiß kann der Lochstempel selbst wiederum und auch die Lochmatrize bzw. der die Einprägung erzeugende Werkzeugvorsprung mit einer Schutzschicht plattiert sein, insbesondere mit einer keramischen Beschichtung.

Weitere Vorteile, Merkmale, Eigenschaften und Aspekte der vorliegenden Erfindung werden in den nachfolgenden Figuren beschrieben. Diese dienen dem einfachen Verständnis der Erfindung.

Es zeigen:
- Figur 1a +b: den Einsatz eines erfindungsgemäßen Verstärkungsbauteils eines Kraftfahrzeugbauteils,
- Figur 2a - d: einen erfindungsgemäßen Verfahrensablauf zum Herstellen eines erfindungsgemäßen Kraftfahrzeugbauteils mit Einbringen einer Einprägung.

In den Figuren werden für gleiche oder ähnliche Bauteile dieselben Bezugszeichen verwendet, auch wenn eine wiederholte Beschreibung oder Darstellung aus Vereinfachungsgründen entfällt. Die zuvor genannten und nachfolgend beschriebenen Merkmale können beliebig untereinander kombiniert werden ohne dabei den Rahmen der Erfindung zu verlassen.

Insbesondere wird für die Stahlblechplatine alternativ oder ergänzend auch für den Vestärkungspatch eine Stahllegierung ausgewählt, welche beispielsweise in der nachfolgend beschriebenen Tabelle als Stahl A, B, C oder D beschrieben ist. Das jeweils andere der beiden Platinen kann dann aus dem gleichen Stahl, aber auch aus einem der nicht härtbaren Stähle E oder F gebildet sein. Die Angabe der Legierungselemente ist in Gew.-%, Rest Eisen und erschmelzungsbedingte Verunreinigungen;

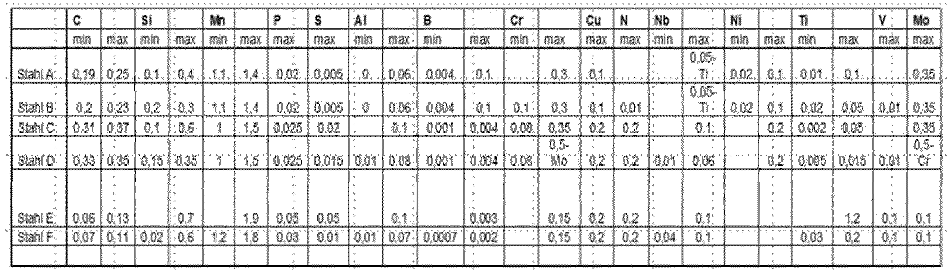

Für alle Stähle ist es möglich, diese vor dem Warmformen mit eine vor Korrosion und Verzunderung schützenden metallischen Vorbeschichtung zu versehen, insbesondere einer AlSi-Legierung oder einer Zn-Legierung oder einer mehrlagigen Kombination daraus.

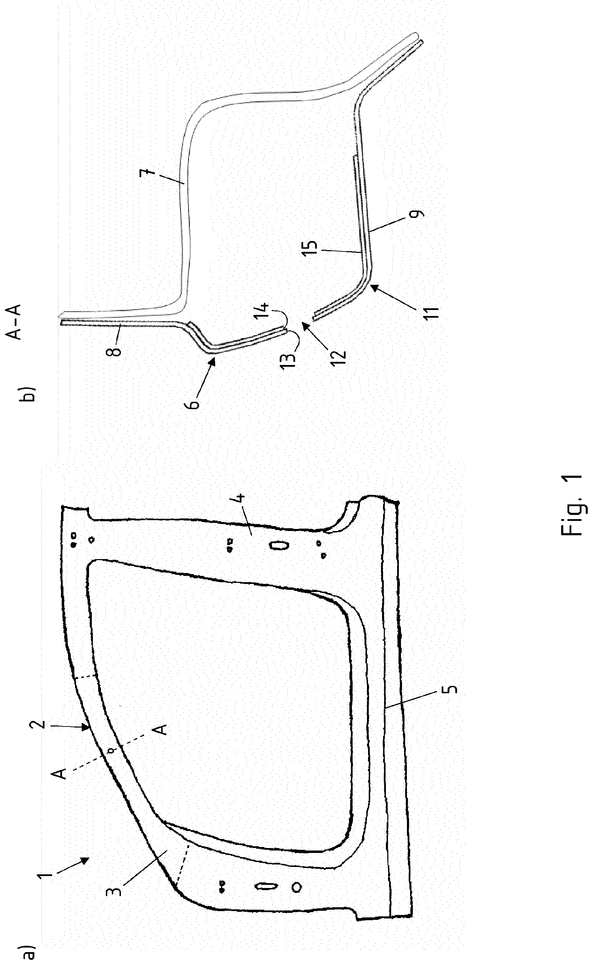

Figur 1a und 1b zeigen den Einsatz eines erfindungsgemäßen Verstärkungsbauteils eines Kraftfahrzeugbauteils 1, hier in Form eines Türrings 2 bzw. einer kombinierten A- und B-Säule 2, 3 mit Schweller 5. Der Türring 2 kann auch Door ring genannt werden.

Figur 1b zeigt dabei eine Querschnittsansicht gemäß der Schnittlinie A-A. Zu sehen ist, dass der Bereich der A-Säule 2 im Querschnitt ein geschlossenes Hohlprofil ausgebildet ist durch zwei aneinander liegende hutförmige bzw. C-förmige Profile. Eine innenliegende Schale 6 ist dabei als das erfindungsgemäße Kraftfahrzeugbauteil 1 ausgebildet und mit einer außenliegenden Schale 7 über jeweils einen Flansch 8 gekoppelt. Die Innenschale 6 ist dazu aus einer ungeformten Stahlblechplatine 9 ausgebildet und weist zusätzlich einen Verstärkungspatch 10 auf, so dass in diesem Bereich eine Doppellage 11 ausgebildet ist. Insgesamt ist somit eine Öffnung 14 ausgebildet, welche die Doppellage 11 durchgreift. Hierzu ist eine kleinere Öffnung 14 sowie relativ dazu gesehen größere Öffnung 14 ausgebildet.

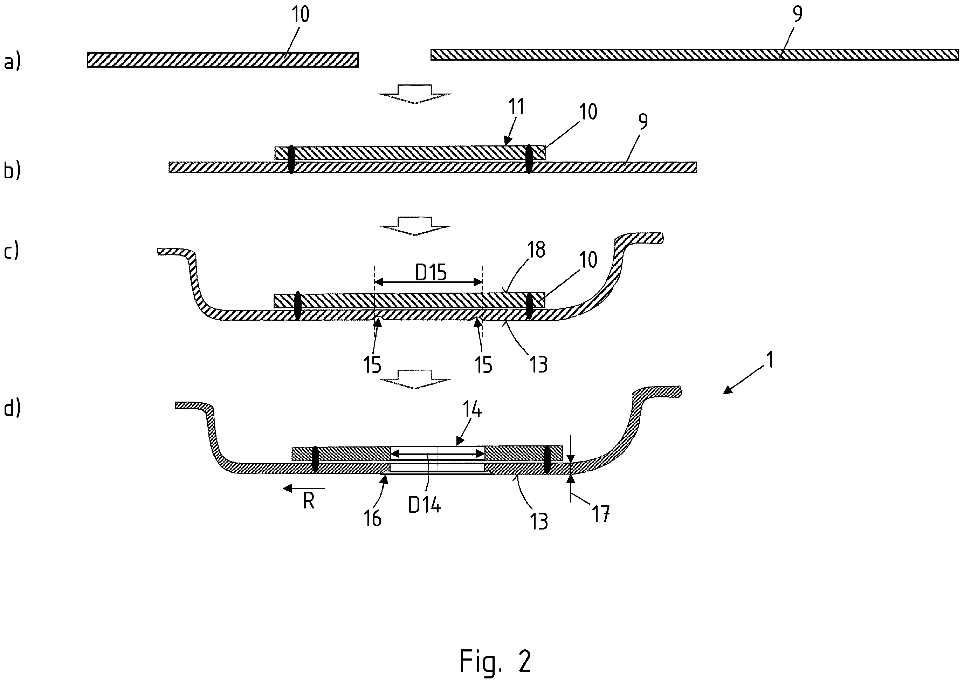

Figuren 2a bis d zeigen den erfindungsgemäßen Verfahrensablauf. Zunächst wird gemäß Figur 2a ein Verstärkungspatch 10 sowie eine Stahlblechplatine 9 bereitgestellt.

Gemäß Figur 2b werden diese beiden eine Doppellage 11 bilden miteinander gekoppelt. Hierzu können beispielsweise Punktschweißungen 12 angesetzt werden.

Gemäß Figur 2c wird von der Oberfläche der später herzustellenden Öffnung 11 eine Einprägung vorgenommen. Die Einprägung weist dabei eine geometrische Ausdehnung bzw. geometrische Abmessung, die größer ist als die spätere geometrische Abmessung der Öffnung. Wird beispielsweise eine kreisrunde Öffnung ausgebildet ist der Durchmesser D15 der Einprägung 15 größer als der Durchmesser D14 der Öffnung 14. Die Einprägung kann dabei vollflächig im Bereich der Einprägung erfolgen. Die Einprägung 15 kann jedoch auch nur im Randbereich umlaufen. Beispielsweise kann die Einprägung 15 bei einer runden herzustellenden Öffnung 14 als Kreis ausgebildet sein, welcher vollständig eingeprägt ist und somit gegenüber der Oberfläche 13 zurückversetzt ist. Die Einprägung 15 kann jedoch auch nur ringförmig ausgebildet werden, wie hier dargestellt. Die Einprägung 15 kann hergestellt werden an dem Vormaterial. Besonders bevorzugt wird die jedoch die Einprägung 15 hergestellt in dem Warmwerkzeug selber. Hier kann beispielsweise ein Werkzeugvorsprung vorhanden sein, so dass beim Warmumformprozess die Einprägung 15 hergestellt wird. Von der auf der Einprägung 15 gegenüberliegenden Seite kommt dann ein Schneid- bzw. Lochwerkzeug und schneidet die Öffnung 14 aus.

Im Sinne der Erfindung kann die Einprägung 15 auch auf beiden Seiten ausgebildet sein, also an der Oberfläche 18 mit Bezug auf Figur 2c an der außenliegenden Oberfläche 13 der Stahlblechplatine 9 als auch an der außenliegenden Oberfläche 18 des Verstärkungspatches 10, was jedoch in Figur 2c nicht nähergestellt ist.

Gemäß Figur 2d ist an dem fertig hergestellten Kraftfahrzeugbauteil dann gegenüber einer Oberfläche bzw. die Öffnung in dem umlaufenden Randbereich 14 die Einprägung 15 gegenüber der Oberfläche 18 zurückversetzt. In Radialrichtung R erstreckt sich die Einprägung 15 bevorzugt um mehr als 0,5 mm jeweils radial umlaufend. Die Einprägung 15 ist gegenüber der Oberfläche 13 zurückversetzt um 4 % bis 20 % bezogen auf die Wandstärke 17 hier der Stahlblechplatine 9.

Ein Schneidstempel sowie ein Schneidabfall, insbesondere zur Herstellung der Öffnung ausgestanztes Blechteil ist aus Vereinfachungsgründen nicht näher dargestellt.

### Bezugszeichen:

- 1 -: Kraftfahrzeugbauteil
- 2 -: Türring
- 3 -: A-Säule
- 4 -: B-Säule
- 5 -: Schweller
- 6 -: innenliegende Schale
- 7 -: außenliegende Schale
- 8 -: Flansch
- 9 -: Stahlblechplatine
- 10 -: Verstärkungspatch
- 11 -: Doppellage
- 12 -: Punktschweißung
- 13 -: Oberfläche zu 9
- 14 -: Öffnung
- 15 -: Einprägung
- 16 -: Randbereich zu 14
- 17 -: Wandicke zu 9
- 18 -: Oberfläche zu 10

- R -: Radialrichtung
- D15 -: Durchmesser zu 15
- D14 -: Durchmesser zu 14

## Patentansprüche

1. Kraftfahrzeugbauteil (1), hergestellt durch Warmumformen und Presshärten aus einer härtbaren Stahlblechplatine (9), wobei das Kraftfahrzeugbauteil (1) einen Verstärkungspatch (10) aufweist, welcher mit der Stahlblechplatine (9) zumindest abschnittsweise eine Doppellage (11) ausbildet, **dadurch gekennzeichnet, dass** das Kraftfahrzeugbauteil (1) im Bereich des Verstärkungspatches (10) eine durch Warmschneiden hergestellte durchgängige Öffnung (14) aufweist, dergestalt, dass eine Öffnung (14) in dem Verstärkungspatch (10) ausgebildet ist und eine Öffnung (14) in der Stahlblechplatine (9), wobei bevorzugt der die Öffnung (14) umlaufende Randbereich (16) an der Stahlblechplatine (9) oder dem Verstärkungspatch (10) gegenüber der weiteren Oberfläche (15) zurückversetzt eingeprägt ist.

2. Kraftfahrzeugbauteil (1) nach Anspruch 1, **dadurch gekennzeichnet, dass** die zurückversetzte Einprägung um 4 % bis 40 %, bevorzugt 8 % bis 35 %, insbesondere 12 % bis 30 % gegenüber der weiteren Oberfläche (15) zurückversetzt ist, bezogen auf die Wandstärke (17) der die Einprägung aufweisenden Stahlblechplatine (9) oder des Verstärkungspatches (10).

3. Kraftfahrzeugbauteil (1) nach einem der Ansprüche 1 oder 2, **dadurch gekennzeichnet, dass** die Einprägung (15) sich von der Öffnung (14) in Querrichtung radial umlaufend um mindestens 0,5 mm, bevorzugt mehr als 1 mm erstreckt.

4. Kraftfahrzeugbauteil (1) nach einem der vorgenannten Ansprüche, **dadurch gekennzeichnet, dass** ein Lochrand der Öffnung (14) nach dem Presshärten einen Grat aufweist, dessen Länge kleiner 0,3 mm, insbesondere kleiner 0,2 mm ist.

5. Kraftfahrzeugbauteil (1) nach einem der vorgenannten Ansprüche, **dadurch gekennzeichnet, dass** die Wandung der Öffnung (14) einen Glattschnittanteil größer 25 %, insbesondere größer 40 % aufweist.

6. Kraftfahrzeugbauteil (1) nach einem der vorgenannten Ansprüche, **dadurch gekennzeichnet, dass** ein beim Warmschneiden hervorgerufener Kragen auf einer Rückseite des Bauteils mit der Verprägung in die Wandung des anderen Bauteils hineinragt.

7. Kraftfahrzeugbauteil (1) nach einem der vorgenannten Ansprüche, **dadurch gekennzeichnet, dass** in die Öffnung (14) eine Einstanzmutter eingesetzt ist, wobei durch die Einstanzmutter selbst das Warmschneiden der Öffnung (14) erfolgt.

8. Verfahren zur Herstellung eines Kraftfahrzeugbauteils (1) mit den Merkmalen von Anspruch 1, **gekennzeichnet durch** folgende Verfahrensschritte:
- Bereitstellen einer Stahlblechplatine (9) und eines Verstärkungspatches (10), wobei wenigstens eine aus einer härtbaren Stahllegierung besteht,
- Koppeln der beiden Teile, dergestalt, dass die Stahlblechplatine (9) und das Verstärkungspatch (10) eine Doppellage (11) ausbilden,
- Erwärmen auf über Ac3-Temperatur, wobei die Einprägung (15) nach dem Erwärmen, während oder unmittelbar nach demWarmumformen eingebracht wird,
- Warmumformen, wobei die Schneideoperation während oder nach der Warmumformung durchgeführt wird,
- Warmschneiden wobei ein Schneidewerkzeug auf der Rückseite der Einprägung (15) schneidet und den Ausschnitt auf der Seite der Einprägung (15) auswirft,
- Presshärten des so umgeformten Kraftfahrzeugbauteils (1).

9. Kraftfahrzeugbauteil (1) nach Anspruch 8, **dadurch gekennzeichnet, dass** bei einer Temperatur zwischen 500° C und 770°°C, insbesondere zwischen 600° C und 730°°C geschnitten wird.

10. Kraftfahrzeugbauteil nach Anspruch 8 oder 9, **dadurch gekennzeichnet, dass** die Einprägung (15) flächig ausgebildet wird oder dass die Einprägung (15) ringförmig ausgebildet wird.

## Geänderte Patentansprüche

### Geänderte Patentansprüche gemäss Regel 137(2) EPÜ.

1. Kraftfahrzeugbauteil (1), hergestellt durch Warmumformen und Presshärten aus einer härtbaren Stahlblechplatine (9), wobei das Kraftfahrzeugbauteil (1) einen Verstärkungspatch (10) aufweist, welcher mit der Stahlblechplatine (9) zumindest abschnittsweise eine Doppellage (11) ausbildet, **dadurch gekennzeichnet, dass** das Kraftfahrzeugbauteil (1) im Bereich des Verstärkungspatches (10) eine durch Warmschneiden hergestellte durchgängige Öffnung (14) aufweist, dergestalt, dass eine Öffnung (14) in dem Verstärkungspatch (10) ausgebildet ist und eine Öffnung (14) in der Stahlblechplatine (9), wobei der die Öffnung (14) umlaufende Randbereich (16) an der Stahlblechplatine (9) oder dem Verstärkungspatch (10) gegenüber der weiteren Oberfläche (15) zurückversetzt eingeprägt ist.

2. Kraftfahrzeugbauteil (1) nach Anspruch 1, **dadurch gekennzeichnet, dass** die zurückversetzte Einprägung um 4 % bis 40 %, bevorzugt 8 % bis 35 %, insbesondere 12 % bis 30 % gegenüber der weiteren Oberfläche (15) zurückversetzt ist, bezogen auf die Wandstärke (17) der die Einprägung aufweisenden Stahlblechplatine (9) oder des Verstärkungspatches (10).

3. Kraftfahrzeugbauteil (1) nach einem der Ansprüche 1 oder 2, **dadurch gekennzeichnet, dass** die Einprägung (15) sich von der Öffnung (14) in Querrichtung radial umlaufend um mindestens 0,5 mm, bevorzugt mehr als 1 mm erstreckt.

4. Kraftfahrzeugbauteil (1) nach einem der vorgenannten Ansprüche, **dadurch gekennzeichnet, dass** ein Lochrand der Öffnung (14) nach dem Presshärten einen Grat aufweist, dessen Länge kleiner 0,3 mm, insbesondere kleiner 0,2 mm ist.

5. Kraftfahrzeugbauteil (1) nach einem der vorgenannten Ansprüche, **dadurch gekennzeichnet, dass** die Wandung der Öffnung (14) einen Glattschnittanteil größer 25 %, insbesondere größer 40 % aufweist.

6. Kraftfahrzeugbauteil (1) nach einem der vorgenannten Ansprüche, **dadurch gekennzeichnet, dass** ein beim Warmschneiden hervorgerufener Kragen auf einer Rückseite des Bauteils mit der Verprägung in die Wandung des anderen Bauteils hineinragt.

7. Kraftfahrzeugbauteil (1) nach einem der vorgenannten Ansprüche, **dadurch gekennzeichnet, dass** in die Öffnung (14) eine Einstanzmutter eingesetzt ist, wobei durch die Einstanzmutter selbst das Warmschneiden der Öffnung (14) erfolgt.

8. Verfahren zur Herstellung eines Kraftfahrzeugbauteils (1) mit den Merkmalen von Anspruch 1, **gekennzeichnet durch** folgende Verfahrensschritte:
- Bereitstellen einer Stahlblechplatine (9) und eines Verstärkungspatches (10), wobei wenigstens eine aus einer härtbaren Stahllegierung besteht,
- Koppeln der beiden Teile, dergestalt, dass die Stahlblechplatine (9) und das Verstärkungspatch (10) eine Doppellage (11) ausbilden,
- Erwärmen auf über Ac3-Temperatur, wobei die Einprägung (15) nach dem Erwärmen, während oder unmittelbar nach demWarmumformen eingebracht wird,
- Warmumformen, wobei die Schneideoperation während oder nach der Warmumformung durchgeführt wird,
- Warmschneiden wobei ein Schneidewerkzeug auf der Rückseite der Einprägung (15) schneidet und den Ausschnitt auf der Seite der Einprägung (15) auswirft,
- Presshärten des so umgeformten Kraftfahrzeugbauteils (1).

9. Verfahren zur Herstellung eines Kraftfahrzeugbauteils (1) nach Anspruch 8, **dadurch gekennzeichnet, dass** bei einer Temperatur zwischen 500°C und 770°C, insbesondere zwischen 600°C und 730°C geschnitten wird.

10. Verfahren zur Herstellung eines Kraftfahrzeugbauteils nach Anspruch 8 oder 9, **dadurch gekennzeichnet, dass** die Einprägung (15) flächig ausgebildet wird oder dass die Einprägung (15) ringförmig ausgebildet wird.
